(19) **Europäisches Patentamt / European Patent Office / Office européen des brevets**

(11) **EP 3 862 456 A1**

(12) # EUROPEAN PATENT APPLICATION
published in accordance with Art. 153(4) EPC

(43) Date of publication:
**11.08.2021 Bulletin 2021/32**

(21) Application number: **19869780.7**

(22) Date of filing: **01.10.2019**

(51) Int Cl.:
*C22C 38/00* (2006.01)   *B23K 20/00* (2006.01)
*C21D 8/02* (2006.01)   *C22C 38/14* (2006.01)
*C22C 38/44* (2006.01)   *C22C 38/58* (2006.01)

(86) International application number:
**PCT/JP2019/038670**

(87) International publication number:
**WO 2020/071343 (09.04.2020 Gazette 2020/15)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **01.10.2018 JP 2018186986**

(71) Applicant: **NIPPON STEEL Stainless Steel Corporation**
**Tokyo 100-0005 (JP)**

(72) Inventors:
- **OIKAWA, Yuusuke**
  **Tokyo 100-0005 (JP)**
- **KAWA, Masatomo**
  **Tokyo 100-0005 (JP)**
- **TSUGE, Shinji**
  **Tokyo 100-0005 (JP)**
- **ANDOH, Junpei**
  **Tokyo 100-0005 (JP)**
- **YAMAMOTO, Yoichi**
  **Tokyo 100-0005 (JP)**

(74) Representative: **Zimmermann & Partner Patentanwälte mbB**
**Postfach 330 920**
**80069 München (DE)**

(54) **CLAD AUSTENITIC STAINLESS STEEL SHEET, BASE STEEL SHEET AND METHOD FOR PRODUCING CLAD STEEL SHEET**

(57)   There is provided an austenitic-stainless clad steel plate including a base material and a cladding material bonded to the base material, wherein the base material is made of carbon steel or low alloy steel, has a carbon equivalent Ceq of 0.38 or less, and has a tensile strength of 490 MPa or more to 620 MPa or less, the cladding material is made of austenitic stainless steel, an average value of shearing strengths of a bonding interface between the base material and the cladding material is 400 MPa or more, and a standard deviation of the shearing strengths is 20 MPa or less.

**EP 3 862 456 A1**

## Description

TECHNICAL FIELD

The present invention relates to an austenitic-stainless clad steel plate and a base-material steel plate, and to a method for producing a clad steel plate.

BACKGROUND ART

A clad steel plate is a steel plate produced by bonding a plurality of different metals and alloys to each other. In a clad steel plate, when different metals or the like are bonded together, a covering metal is called a cladding material and a metal being covered is called a base material. Use of such a clad steel plate enables utilization of properties of both a base material and a cladding material, which enables composite properties to be provided at a low cost.

For example, there is a case where high-corrosion-resistant alloy such as stainless steel is used as a starting material of a cladding material, and carbon steel or low alloy steel is used as a starting material of a base material. In this case, the high-corrosion-resistant alloy can provide corrosion resistance, and the carbon steel or the low alloy steel can provide strength and weldability with carbon steel.

Applications of a clad steel plate include tanks and the like for a chemical tanker. A chemical tanker is a carrying vessel in which various kinds of chemicals are loaded. For that reason, many of starting materials used for a chemical tanker are required to be resistant to chemicals, and many of the tanks are made of stainless steel. In a case where a clad steel plate is used for a tank, for example, a stainless clad steel plate, in which a stainless steel is disposed inside and a carbon steel is disposed outside, is used. By using such a stainless clad steel plate, welding the clad steel plate to an outer shell that is present outside of the clad steel plate and made of carbon steel can be made easy while corrosion resistance is obtained.

Known methods for producing a clad steel plate include the assembly rolling process, the enshrouding casting and rolling process, the explosion bonding process, the buildup welding process, and the like. Among these methods, the assembly rolling process, in which hot rolling is performed on an assembled starting material to bond an interface, is excellent in producing a large-sized product efficiently. Therefore, the assembly rolling process is often applied to production of a clad steel plate. However, the assembly rolling process has problems such as limitations in combinations of steel types and necessity for a technique to provide adhesiveness between an interface.

In conventional practices, the assembly rolling process involves a method in which a binder being Ni alloy or the like is sandwiched between a stainless steel being a cladding material and a carbon steel or a low alloy steel being a base metal, to enhance an adhesiveness of an interface. However, the method involves use of a Ni alloy or the like, raising a problem of increasing a production cost.

In place of this method, a method is employed in which, with nothing sandwiched between a stainless steel and a carbon steel or a low alloy steel, four sides of an interface are welded to be sealed in assembling a starting material, the interface is subjected to vacuum drawing, and then hot rolling is performed at high temperature at a certain rolling reduction rate or more. This method can promote movement of elements across the interface, promoting metallic bonds.

Furthermore, to increase a strength and a toughness of a base material, adding rolling at low temperature is effective. In addition, performing water cooling after the rolling to refine a ferrite transformation structure is also effective in enhancing the strength and the toughness. On the other hand, heat treatment after rolling is often omitted for reasons such as leading to coarsening of ferrite grains in a base material and occurrence of deformation due to a difference in coefficient of thermal expansion.

For example, Patent Document 1 discloses a producing method in which a rolling reduction rate in a high-temperature range of 850 to 1050°C is set at 30% or more to secure adhesiveness. In addition, this producing method includes performing rolling to a low temperature of 750 to 850°C to increase strength, and performing cooling by air cooling or water cooling. At this time, a content of C of a cladding material is set at 0.03% or less because the low-temperature rolling can cause sensitization in stainless steel of the cladding material.

Patent Document 2 discloses a producing method in which a content of C of a cladding material is similarly set at 0.02% or less, and a rolling reduction ratio at 1000°C or more is set at 2.5 or more, to ensure adhesiveness. In this method, rolling of 50% or more is performed at 850°C or less, and water cooling is performed, to enhance a DWTT property of a base material.

Patent Document 3 discloses a method for producing a clad steel in which a content of C of a cladding material is set at 0.02% or less and adjust a component of the base material to ensure toughness, and in addition, a rolling reduction ratio at 950°C or more is set at 1.5 or more, to provide adhesiveness. In this producing method, rolling of 50% or more is further performed at 900°C or less, and water cooling is performed, to enhance a DWTT property of a base material.

Patent Document 4 discloses a stainless clad steel in which a cladding material is made of austenitic stainless steel that contains components including C: 0.020% or less, and the like, and partially includes a recrystallized structure, and the shearing strength with a base material of 300 MPa or more as an index of adhesiveness. In a method for producing this stainless clad steel, a rolling reduction ratio at 1000°C or more is set at 1.5 or more, a finishing rolling temperature is set at 850°C or more, and in addition, accelerated cooling is performed.

LIST OF PRIOR ART DOCUMENTS

PATENT DOCUMENT

Patent Document 1: JP5-154672A
Patent Document 2: JP5-245658A
Patent Document 3: JP2015-105399A
Patent Document 4: WO 2015/59909

SUMMARY OF INVENTION

TECHNICAL PROBLEM

To a clad steel plate used for a chemical tanker, adhesiveness is of particular importance. This is because separation from an interface in a chemical tanker due to a decrease in adhesiveness can cause an accident such as a spill of stored chemicals. Therefore, a clad steel plate used for a chemical tanker is required to have stability, particularly in its adhesiveness. In addition, environmental regulations have been increasingly strengthened in recent years, and thus improvement in fuel efficiency is also required. For this reason, the reduction of thickness and weight, which reduces a thickness of a starting material for a tanker, that is, a clad steel plate, is also required.

There are increasing needs for high-strength base materials, and the thickness and weight reduction of a clad steel plate being a starting material makes a stress on an interface between a base material and a cladding material relatively high. Consequently, it becomes difficult to set a margin of design such as taking a safety factor into consideration, and moreover, a stable adhesiveness is required.

The methods disclosed in Patent Documents 1 to 4 all involve, as a method for ensuring adhesiveness of an interface, performing vacuum drawing on an interface when starting materials are assembled, as a precondition, and set rolling reduction rates at high temperatures of 850°C or more, or 1000°C or more to be not less than a certain value.

In general, this promotes diffusion of elements across an interface, which can increase adhesiveness. However, in this case, although shearing strengths, which are an index representing adhesiveness of an interface, shows high values as a whole, the shearing strengths may vary greatly, and some of the shearing strengths may show very low values depending on positions.

Since shearing strength measurement is conducted by a fracture test, in which the number of spots for measuring shearing strengths on each plate is four at most at both end portions; in this case, the spots for the measurement are not necessarily positions that show low values. For this reason, it is possible that shearing strengths vary, and a shearing strength can show an extremely low value depending on positions. In particular, in a case where a high-strength base material is used to reduce a thickness, if there is a spot where a shearing strength is low, separation from an interface tends to occur with high stress. For this reason, the clad steel plates disclosed in Patent Documents 1 to 4 are considered not to have sufficiently stable adhesiveness of their interfaces.

In view of the above, the present invention has an objective to provide an austenitic-stainless clad steel plate, a base-material steel plate, and a method for producing a clad steel plate, the austenitic-stainless clad steel plate having high strength and a good, stable adhesiveness across an interface.

SOLUTION TO PROBLEM

The present invention is made to solve the above problems, and the gist of the present invention is an austenitic-stainless clad steel plate and a base-material steel plate, and a method for producing a clad steel plate described below.

(1) An austenitic-stainless clad steel plate that includes a base material and a cladding material bonded to the base material, wherein
the base material is made of carbon steel or low alloy steel,
a carbon equivalent Ceq of the base material expressed by the following Formula (i) is 0.38 or less, and a tensile strength of the base material is 490 MPa or more to 620 MPa or less,

the cladding material is made of austenitic stainless steel, and

an average value of shearing strengths of a bonding interface between the base material and the cladding material is 400 MPa or more, and a standard deviation of the shearing strengths is 20 MPa or less:

$$Ceq = C + Mn/6 + (Cr+Mo+V)/5 + (Ni+Cu)/15 \qquad (i)$$

where each symbol of an element in Formula (i) indicates a content of the element (mass%) contained in the steel, and a content being zero means that the element is not contained.

(2) The austenitic-stainless clad steel plate according to (1), wherein a hydrogen content of the base material is 1.0 ppm or less, and a hydrogen content of the cladding material is 3.0 ppm or less.

(3) The austenitic-stainless clad steel plate according to (1) or (2), wherein a chemical composition of the base material contains, in mass percent:

C: 0.08 to 0.10%;
Si: 0.10 to 0.50%;
Mn: 1.30 to 1.60%;
P: 0.035% or less;
S: 0.035% or less;
Nb: 0.02 to 0.05%;
Ti: 0.005 to 0.020%;
Al: 0.01 to 0.05%;
N: 0.006% or less; and
Ni: 0 to 0.20%.

(4) A method for producing the austenitic-stainless clad steel plate according to any one of (1) to (3), the method including:

(a) a step of stacking a base-material steel plate and a cladding material steel plate, the base-material steel plate being carbon steel or low alloy steel, including a surface, and being provided in advance with a hole communicating with the surface, the cladding material steel plate including a surface and being austenitic stainless steel, causing the surfaces to abut each other to form a stacking plane, and sealing a circumference of the stacking plane by welding, to produce a clad starting material for rolling;

(b) a step of performing vacuum drawing from the hole communicating with the stacking plane while heating the clad starting material for rolling to a temperature of 200 to 450°C so that a degree of vacuum in the stacking plane becomes 0.1 Torr or less; and

(c) a step of heating, after the step (b), the clad starting material for rolling within a temperature range from 1050 to 1250°C, and performing hot rolling on the clad starting material for rolling.

(5) The method for producing an austenitic-stainless clad steel plate according to (4), wherein in the step (c), in performing the hot rolling, a rolling reduction ratio in a temperature region of 1000°C or more is set at 3 or more, and a rolling reduction rate in a temperature region of less than 1000°C is set at 30% or more.

(6) The method for producing an austenitic-stainless clad steel plate according to (4) or (5), wherein after the hot rolling in the step (c), cooling is performed at a cooling rate of less than 1.0°C/s in a temperature region of 700 to 400°C and at a cooling rate of 0.4°C/s or less in a temperature region of 400 to 200°C.

(7) A base-material steel plate used in the method for producing an austenitic-stainless clad steel plate according to (6), the base-material steel plate including

a chemical composition containing, in mass percent:

C: 0.08 to 0.10%;
Si: 0.10 to 0.50%;
Mn: 1.30 to 1.60%;
P: 0.035% or less;
S: 0.035% or less;
Nb: 0.02 to 0.05%;
Ti: 0.005 to 0.020%;
Al: 0.01 to 0.05%;
N: 0.006% or less; and

Ni: 0 to 0.20%.

ADVANTAGEOUS EFFECTS OF INVENTION

According to the present invention, an austenitic-stainless clad steel plate having high strength and a good, stable adhesiveness across an interface, and a base-material steel plate can be obtained.

DESCRIPTION OF EMBODIMENT

To solve the problems described above, the present inventors conducted the following studies. As a result, the following findings (a) to (c) were obtained.

(a) As described above, a possible cause of the occurrence of a low-shearing-strength spot is presence of hydrogen in steel as a starting material. Such hydrogen aggregates into gaseous hydrogen through diffusion or the like in pores that are present in an interface between a blank steel plate to be a base material and a blank steel plate to be a cladding material.
(b) The presence of the gaseous hydrogen in the interface causes a pressure (air pressure) to act during or after rolling in a direction of separating the base material and the cladding material, resulting in insufficient adhesion between the base material and the cladding material. Consequently, gaps are formed between the base material and the cladding material, and at spots where the gaps occur, shearing strength decreases.
(c) To prevent or reduce the formation of the gaps, controlling an amount of hydrogen in the interface appropriately is effective. The hydrogen dissolved in the steel is mixed in molten steel on order of ppm and remains in the steel and is desirably removed appropriately before rolling by treatment such as heat treatment to be described below.

The present invention is made based on the findings described above. Requirements of the present invention will be described below in detail.

1. Configuration in Present Invention

An austenitic-stainless clad steel plate according to the present invention includes a base material and a cladding material bonded to the base material. The base material is made of carbon steel or low alloy steel described below. The cladding material is made of austenitic stainless steel. Hereinafter, for description, a starting material steel plate being a base material before bonding by hot rolling will be called a base-material steel plate, and a starting material steel plate being a cladding material before the bonding will be called a cladding material steel plate. Before and after rolling, the base material and the base-material steel plate have basically the same chemical composition, and the cladding material and the cladding material steel plate have basically the same chemical composition, except for hydrogen.

2. Base material

2-1. Chemical composition of base material

The base material is made of carbon steel or low alloy steel. Examples of the carbon steel and the low alloy steel include steel materials for a welded structure, carbon steels for a boiler or a pressure vessel, and steel materials for shipbuilding.

Ceq: 0.38 or less

Carbon equivalent Ceq is an index relating to weldability and important for a vessel such as a chemical tanker because a hull of a chemical tanker is constructed by welding. From a viewpoint of weldability, a carbon equivalent Ceq of the base material according to the present invention is set at 0.38 or less. The carbon equivalent Ceq of the base material is preferably set at 0.365 or less.
The carbon equivalent Ceq is expressed by Formula (i) shown below. Formula (i) shown below is described in Section 1.5 of Rules and Guidance for the Survey and Construction of Steel Ships, Part K (issued by Class NK (general incorporated foundation)) and the numerical value shown above is described as KA36 in Section 3.1.

$$Ceq = C + Mn/6 + (Cr+Mo+V)/5 + (Ni+Cu)/15 \qquad (i)$$

where each symbol of an element in Formula (i) indicates a content of the element (mass%) contained in the steel, and a content being zero means that the element is not contained.

2-2. Tensile strength of base material

A tensile strength of the base material is within a range from 490 or more to 620 MPa or less, which is required for a base material of a clad steel plate used for a chemical tanker. The range of the tensile strength is described as KA36 in Rules and Guidance for the Survey and Construction of Steel Ships, Part K described above, and at a highest strength level as a stainless clad steel plate to be used.

The tensile strength of the base material is measured by removing a cladding material from a clad steel plate, extracting a tensile test specimen, and subjecting the tensile test specimen to a tensile test in conformity with JIS Z 2241:2011.

3. Cladding material

The cladding material of the austenitic-stainless clad steel plate according to the present invention is made of austenitic stainless steel. With this configuration, the cladding steel plate can have corrosion resistance to chemicals stored within an inner wall of a tank. A typical steel type of the austenitic stainless steel is SUS316L. However, the austenitic stainless steel may be other than this steel type; the austenitic stainless steel is not limited to a particular steel type as long as the cladding material is made of austenitic stainless steel. In addition to SUS316L, examples of the steel type include SUS304, SUS317L, and the like.

4. Shearing strength of bonding interface of clad steel plate and standard deviation of shearing strengths

For the clad steel plate according to the present invention, an average value of shearing strengths of a bonding interface between the base material and the cladding material and a standard deviation of the shearing strength values are used to evaluate a good, stable adhesiveness. This is because, even when the average value of shearing strengths is high, partial existence of a spot where the shearing strength is low can cause separation at the interface of the clad steel plate. For this reason, the standard deviation of values of the shearing strength is used for evaluation of a stable adhesiveness.

The average value of the shearing strengths of the bonding interface between the base material and the cladding material is set at 400 MPa or more, more preferably 420 MPa or more. In general, a shearing strength increases as a tensile strength of the base material or the cladding material increases. Therefore, for the clad steel plate according to the present invention, with consideration given to the tensile strengths of the base material and the cladding material, the average value of shearing strengths is set within the range described above.

The standard deviation of the shearing strengths of the bonding interface is preferably as small as possible. The standard deviation of the shearing strengths is set at 20 MPa or less, preferably 18 MPa or less.

The shearing strength is measured in conformity with JIS G 0601:2012, and the number of test is ten times or more. It is generally considered that a standard deviation cannot be obtained properly if the number of times of performing a test is less than ten. As a test specimen, a plate test specimen described in JIS G 0601:2012, in which a projection being a portion of a cladding material is left on a base material, is used.

5. Hydrogen content

The clad steel plate according to the present invention, to obtain a stable adhesiveness in the bonding interface between the base material and the cladding material, it is preferable to control hydrogen contents of the base material and the cladding material of the clad steel plate within the following respective ranges.

Specifically, the hydrogen content of the base material of the clad steel plate is preferably set at 1.0 ppm or less, more preferably 0.8 ppm or less, still more preferably 0.6 ppm or less. The hydrogen content of the cladding material of the clad steel plate is preferably set at 3.0 ppm or less, more preferably 2.5 ppm or less, still more preferably 2.3 ppm or less.

In the austenitic stainless steel being the cladding material, its steel micro-structure mainly includes an austenite phase. When compared with a ferritic phase that is a steel micro-structure of carbon steel, this austenite phase has such properties that a solubility of hydrogen is large, and a diffusion velocity of hydrogen is low. As a result, the hydrogen content of the cladding material made of the austenitic stainless steel shows a high value when compared with the hydrogen content of the base material.

Methods for measuring a hydrogen content include a fusion method, a heating method, and the like defined in JIS Z 2614:1990. In the clad steel plate according to the present invention, the hydrogen content is measured by the inert gas fusion method and the thermal conductivity method defined in JIS Z 2614:1990.

6. Producing method

A method for producing the clad steel plate according to the present invention will be described below.

6-1. Method for producing base-material steel plate and cladding-material steel plate

The base-material steel plate and the cladding-material steel plate are produced by a conventional method. Specifically, steels are melted by a well-known method using a converter, an electric furnace, a vacuum furnace, or the like and then formed into slabs that have chemical compositions controlled to be predetermined chemical compositions by a continuous casting process or an ingot-casting-blooming process. The resulting slabs are subjected to hot rolling in normally-used conditions to be formed into hot-rolled steel plates. The resultant hot-rolled steel plates may be subsequently subjected to annealing, pickling, polishing, and the like, as necessary.

6-2. Welding and vacuum drawing

A base-material steel plate that is carbon steel or low alloy steel and is provided in advance with a hole for vacuum drawing and a cladding-material steel plate that is austenitic stainless steel plate are stacked together. Subsequently, welding is performed on a circumference of a plane (interspace) across which the base-material steel plate and the cladding-material steel plate stacked together abut each other (hereinafter, referred to as "stacking plane") to seal four sides of the base-material steel plate and the cladding-material steel plate, to form a clad starting material for rolling. At this time, the welding may be performed by using a method such as arc welding, laser welding, electron beam welding, and the like, and is not limited to a particular method.

It is preferable to perform the vacuum drawing from the hole for the vacuum drawing provided in advance in the base-material steel plate of the clad starting material for rolling such that a degree of vacuum of the stacking plane becomes as high as 0.1 Torr or less. After the vacuum drawing, the hole of the base-material steel plate is hermetically closed. The hole for vacuum drawing communicates with the stacking plane through a side surface of the base-material steel plate in the starting material, and thus the stacking plane of the clad starting material for rolling can be evacuated highly. In addition, in the vacuum drawing, it is preferable to heat the clad starting material for rolling to a temperature region of 200 to 450°C.

This causes gas components in the stacking plane to expand, producing an effect of making it easy to remove the gas components. In addition, this also produces an effect of promoting the removal because a diffusion velocity of hydrogen greatly increases with an increase in temperature. One of reasons for heating the clad starting material for rolling to remove hydrogen in performing the vacuum drawing on the stacking plane is that gas components in the interface can be removed at the same time. In addition, if the clad starting material for rolling is heated without the vacuum drawing performed on the stacking plane, removal of hydrogen by diffusion is little made from the cladding-material steel plate since the cladding-material steel plate, in which the diffusion velocity of hydrogen is very low, covers one side of the clad starting material for rolling; therefore, it is considered that an amount of hydrogen in a vicinity of the cladding-material steel plate decreases little. In contrast, in a case where the heating is performed while the vacuum drawing is performed on the stacking plane, an effect of the removal by diffusion that is the same as that in a case where the cladding material does not cover one side of the clad starting material for rolling can be obtained, which is very efficient.

If the degree of vacuum in the stacking plane is more than 0.1 Torr, poor bonding can occur between the base material and the cladding material after rolling. Additionally, hydrogen contents of the base material and the cladding material cannot be reduced sufficiently after rolling, resulting in a decrease in shearing strength. For this reason, the degree of vacuum in the stacking plane is preferably 0.1 Torr or less, more preferably 0.01 Torr or less. Note that the degree of vacuum in the stacking plane is preferably as low as possible; however, decreasing the degree of vacuum to 0.005 Torr or less has little effect on enhancing the bonding strength.

If the heating temperature in the vacuum drawing is less than 200°C, hydrogen still remains in the base material and the cladding material after rolling. It is considered that this is because the diffusion velocity of hydrogen is low in a temperature region of less than 200°C, and thus hydrogen cannot be removed sufficiently. Therefore, the heating temperature is preferably set at 200°C or more.

However, if the heating temperature in the vacuum drawing becomes more than 450°C, a strength of carbon steel or low alloy steel which is the base-material steel plate rapidly decreases, which may raise a problem such as one in which gaps are formed in the stacking plane due to bending caused by a difference in thermal expansion between the base-material steel plate and the cladding-material steel plate. As a result, shearing strength may decrease. For this reason, the heat temperature is preferably set at 450°C or less.

6-3. Rolling

Subsequently, the clad starting material for rolling subjected to the vacuum drawing and the heating is preferably subjected to hot processing by being heated within the temperature range from 1050 to 1250°C.

If a heating temperature in the hot rolling is less than 1050°C, it is difficult to promote diffusion of metals in the stacking plane to improve adhesiveness. In addition, it is difficult to ensure a rolling reduction ratio at 1000°C or more to be described below. As a result, shearing strength decreases. For this reason, the heating temperature in the hot rolling is preferably set at 1050°C or more. If the heating temperature is excessively high, however, scales are produced in large quantity on the base-material steel plate. Therefore, the heating temperature in the hot rolling is preferably set at 1250°C or less.

For the hot rolling, the rolling reduction ratio in a temperature region of 1000°C or more is preferably set at 3 or more, and a rolling reduction rate in a temperature region of less than 1000°C is preferably set at 30% or more.

Here, the rolling reduction ratio in the temperature region of 1000°C or more is obtained by dividing a starting material thickness of the clad starting material for rolling before the rolling by a plate thickness of the clad steel plate at 1000°C. If the rolling reduction ratio in the temperature region of 1000°C or more is less than 3, it is difficult to promote recrystallization in the interface between the base material and the cladding material to provide a stable, high adhesiveness. Therefore, the rolling reduction ratio in the temperature region of 1000°C or more is preferably set at 3 or more.

The rolling reduction rate at less than 1000°C is obtained by dividing an amount of plate thickness reduction by rolling in the temperature region of less than 1000°C by the plate thickness of the clad steel plate at 1000°C, and is expressed in percentages. In the temperature region of less than 1000°C, the base metal is substantially at not more than its recrystallization temperature. By performing rolling in this temperature region, rolling strain can be accumulated, and this serves as a nucleation site to refine grains during ferrite-pearlite transformation, which can in turn provide high strength and high toughness. In order to obtain high tensile strength, the rolling reduction rate in the rolling at less than 1000°C is preferably set at 30% or more.

6-4. Cooling

Subsequently, cooling performed after the hot rolling is preferably performed at a cooling rate of less than 1.0°C/s in a temperature region of 700 to 400°C and is preferably performed at a cooling rate of 0.4°C/s or less in a temperature region of 400 to 200°C.

As described above, by performing the heating to remove hydrogen while the vacuum drawing is performed on the stacking plane, a clad steel plate having a good, stable adhesiveness of its interface can be provided. However, in a case where, for example, an alloy steel having high hardenability is used as the base-material steel plate, a minute mixed layer may be produced between the base-material steel plate and the cladding material. When rapid cooling is performed, such a minute mixed layer can cause separation attributable to hydrogen, due to another factor, although this rarely occurs.

That is, it is possible that, in the rapid cooling, a minute portion having high hardenability produced by mixing components of the cladding material and the base material turns into a hard martensitic structure, which causes delayed fracture attributable to hydrogen, resulting in occurrence of a crack.

In order to prevent such delayed fracture, the followings are effective by performing slow cooling as the cooling after the rolling: firstly, to promote transformation of the structure into ferrite; secondly, prolonging a time of high temperature to remove hydrogen from the structure.

The base material undergoes ferrite transformation in a temperature region of 700°C or less; however, if a cooling rate of 1.0°C/s or more is set in a temperature region of 700 to 400°C, a time taken for a steel micro-structure of the base material to transform into a ferritic phase cannot be ensured sufficiently. In addition, hydrogen does not diffuse sufficiently after the ferrite transformation. Therefore, in the temperature region of 700 to 400°C, a cooling rate of less than 1.0°C/s is preferably set.

In the temperature region of 400 to 200°C, the diffusion velocity of hydrogen further decreases from that in the temperature region described above. For this reason, when the cooling is performed in the temperature region of 400 to 200°C at a cooling rate of more than 0.4°C/s, it is difficult to promote the diffusion of hydrogen. Therefore, in the temperature region of 400 to 200°C, a cooling rate of 0.4°C/s or less is preferably set. Note that a cooling rate in a temperature region of less than 200°C is not particularly limited because the diffusion of hydrogen decreases to a level at which the diffusion can be ignored.

6-4-1. Chemical composition of base-material steel plate

A chemical composition of the base-material steel plate is not limited as long as the base material after rolling has a predetermined carbon equivalent and a predetermined tensile strength. However, in a case where the clad steel plate is produced by the method in which slow cooling is performed after rolling, which is described in Section 6-4 (Cooling) described below, in a case where the ferrite structure may coarsen, leading to decreases in strength and toughness, a base-material steel plate having a chemical composition described below is preferably used.

This can prevent or reduce the decreases in strength and toughness, and a base material having high strength can be provided. Reasons for limiting a content of each element are as follows. In the following description, a symbol "%" for the content means "percent by mass".

C: 0.08 to 0.10%

C (carbon) is an element necessary to ensure a strength of the base material. A content of C is therefore preferably set at 0.08% or more. However, if C is contained at more than 0.10%, C degrades weldability and low-temperature toughness, and thus the content of C is preferably set at 0.10% or less.

Si: 0.10 to 0.50%

Si (silicon) is an element necessary for deoxidation. A content of Si is therefore preferably set at 0.10% or more. However, if Si is contained at more than 0.50%, Si degrades toughness and additionally falls out of the definition of KA36 determined in Rules and Guidance for the Survey and Construction of Steel Ships, Part K (issued by Class NK (general incorporated foundation)). The content of Si is therefore preferably set at 0.50% or less.

Mn: 1.30 to 1.60%

By being contained, Mn (manganese) improves strength and toughness. A content of Mn is therefore preferably set at 1.30% or more. However, if Mn is contained at more than 1.60%, Mn degrades weldability and additionally falls out of the definition of KA36. The content of Mn is therefore preferably set at 1.60% or less.

P: 0.035% or less

P (phosphorus) is also contained in a raw material and is an impurity element that is unavoidably contained. When contained excessively, P degrades weldability and the like, and thus a content of P is preferably as small as possible. The content of P is preferably set at 0.035% or less, more preferably 0.02% or less. On the other hand, excessive reduction of P increases a production cost, and thus the content of P is preferably set at 0.005% or more.

S: 0.035% or less

S (sulfur) is an impurity element that is unavoidably contained. S can bind with Mn to form inclusions, serving as a starting point of rusting. A content of S is therefore preferably set at 0.035% or less. From a viewpoint of improving corrosion resistance, the content of S is more preferably set at 0.010% or less. On the other hand, excessive reduction of S increases a production cost, and thus the content of S is preferably set at 0.001 % or more.

Nb: 0.02 to 0.05%

By being contained, Nb (niobium) promotes refining base material grains, improving both strength and toughness. A content of Nb is therefore preferably set at 0.02% or more, more preferably 0.030% or more. However, if Nb is contained at more than 0.05%, Nb rather degrades toughness due to precipitation of Nb carbide and additionally falls out of the definition of KA36. The content of Nb is therefore preferably set at 0.05% or less.

Ti: 0.005 to 0.020%

By being contained, Ti (titanium) precipitates in a form of Ti nitride, preventing sensitization of a stainless-steel cladding material. In addition, even when high temperature heating is performed at a temperature as high as 1150°C in performing rolling on the base material and the cladding material, coarsening of austenite grains in the base material can be prevented or reduced. A content of Ti is therefore preferably set at 0.005% or more. However, if Ti is contained at more than 0.020%, Ti rather degrades toughness due to precipitation of Ti nitride and additionally falls out of the definition of KA36. The content of Ti is therefore preferably set at 0.020% or less, more preferably 0.015% or less.

Al: 0.01 to 0.05%

Al (aluminum) is usually contained as a deoxidizer. To obtain this effect, a content of Al is preferably set at 0.01% or more. However, if Al is contained at more than 0.05%, Al degrades toughness. The content of Al is therefore preferably set at 0.05% or less.

N: 0.006% or less

N (nitrogen) precipitates together with Ti in a form of Ti nitride to prevent and reduce the coarsening of the austenite grains; however, a sufficient content of N is at a level at which N is unavoidably contained. Specifically, the content of N is preferably set at 0.006% or less. If N is contained at a content exceeding the range, N forms nitrides together with, in addition to Ti, Al and the like to degrades toughness.

Ni: 0 to 0.20%

Ni (nickel) improves a low-temperature toughness and the like of steel and is thus an element that is effective particularly for use in a low-temperature environment. Ni therefore may be contained at a limited content as necessary. However, if contained excessively, Ni significantly increases a raw-material cost and promotes occurence of a martensite phase in a clad interface. A content of Ni is therefore preferably set at 0.20% or less, more preferably 0.10% or less. On the other hand, to obtain the effect, the content of Ni is preferably 0.010% or more, more preferably 0.020% or more. In addition, the producing conditions described above are preferably set.

Additionally, elements such as Cr, Cu, Mo, V, and Ca may be contained as necessary. Cr (chromium) has an effect of enhancing strength. Therefore, when Cr is to be contained, a content of Cr is preferably set within a range from 0.01 to 0.20%. Cu (copper) has an effect of enhancing strength and toughness. Therefore, when Cu is to be contained, a content of Cu is preferably set within a range from 0.01 to 0.35%. Mo (molybdenum) has an effect of enhancing strength. Therefore, when Mo is to be contained, a content of Mo is preferably set within a range from 0.01 to 0.08%. V (vanadium) has an effect on refining grains. Therefore, when V is to be contained, a content of V is preferably set within a range from 0.02 to 0.10%. Ca (calcium) has an effect of improving toughness. Therefore, when Ca is to be contained, a content of Ca is preferably set within a range from 0.001 to 0.004%.

In the chemical composition of the base material according to the present invention, the balance consists of Fe and unavoidable impurities. The term "unavoidable impurities" as used herein means components that are mixed in producing the base-material steel plate industrially due to raw materials such as ores and scraps, and various factors of a producing process, and are allowed to be mixed in the base-material steel plate within ranges in which the impurities have no adverse effect on the present invention.

The present invention will be described below more specifically with reference to Examples, but the present invention is not limited to these Examples.

EXAMPLE

Austenitic stainless steels having chemical compositions shown in Table 1 were melted and formed into cast pieces, which were subjected to processes including hot rolling, annealing, and pickling to be produced into austenitic-stainless-steel cladding-material steel plates each having a thickness of 20 mm. Note that the cladding material had the same composition after rolling except for hydrogen. Carbon steels having chemical compositions shown in Table 2 were melted and formed into cast pieces, which were subjected to processes including hot rolling and descaling to be produced into carbon-steel base-material steel plates each having a thickness of 120 mm. Note that the base material had the same composition after rolling except for hydrogen.

[Table 1]

TABLE 1

| Steel type of cladding material | Chemical Composition (mass%, Balance: Fe and unavoidable impurities) | | | | | | | | | |
|---|---|---|---|---|---|---|---|---|---|---|
| | C | Si | Mn | P | S | Ni | Cr | Mo | Cu | N |
| A | 0.022 | 0.51 | 1.44 | 0.028 | 0.0006 | 11.11 | 16.80 | 2.83 | 0.27 | 0.045 |
| B | 0.053 | 0,42 | 0.83 | 0.028 | 0.0022 | 8.12 | 18-17 | 0.22 | 0.31 | 0.051 |

[Table 2]

TABLE 2

| Steel type of base material | Chemical Composition (mass%, Balance: Fe and unavoidable Impurities) | | | | | | | | | | Carbon equivalent Ceq† |
|---|---|---|---|---|---|---|---|---|---|---|---|
| | C | Si | Mn | P | S | Nb | Ti | Al | N | Ni | |
| C | 0.085 | 0.25 | 1.35 | 0.021 | 0.003 | 0.026 | 0.012 | 0.017 | 0.0028 | 0.011 | 0311 |
| D | 0.094 | 0.35 | 1.41 | 0.013 | 0.005 | 0.041 | 0.011 | 0.033 | 0.0045 | 0.014 | 0.330 |
| E | 0.088 | 0.42 | 1.51 | 0015 | 0.004 | 0036 | 0.007 | 0.025 | 0.0032 | 0.022 | 0.341 |
| F | 0.091 | 0.37 | 1.57 | 0.019 | 0.002 | 0.043 | 0.009 | 0.022 | 0.0022 | 0.025 | 0.354 |
| G | 0.071 ** | 0.29 | 1.33 | 0.022 | 0.002 | 0.023 | 0.014 | 0.024 | 0.0049 | 0.031 | 0295 |
| H | 0.111 ** | 0.36 | 1.51 | 0.025 | 0.004 | 0.046 | 0.014 | 0.021 | 0.0051 | 0.013 | 0.364 |
| I | 0.088 | 0.43 | 115 ** | 0.020 | 0.006 | 0.030 | 0.006 | 0.018 | 0.0033 | 0.048 | 0.283 |
| J | 0.092 | 0.33 | 1.45 | 0018 | 0005 | 0.012** | 0.009 | 0.038 | 0.0038 | 0.008 | 0.334 |
| K | 0.093 | 0.26 | 1.37 | 0.016 | 0.004 | 0035 | 0.003** | 0.041 | 0.0044 | 0.024 | 0.323 |
| L | 0.089 | 0.29 | 1.38 | 0.015 | 0.003 | 0.033 | 0.013 | 0.061 ** | 0.0047 | 0.028 | 0.321 |
| M | 0.090 | 0.31 | 1.42 | 0.014 | 0.002 | 0.028 | 0.015 | 0.025 | 0.0072 ** | 0.031 | 0.329 |
| N | 0,061 ** | 0.41 | 1.58 | 0.011 | 0.001 | 0.031 | 0.008 | 0.031 | 0.0022 | 0.222** | 0.339 |

t Ceq=C+HMn/6+(Cr+Mo+V)/5+(Ni+Cu)/15 ...(i)
The mark"**" indicates that the value fell out of the preferable range defined in the present invention.

A hole for vacuum drawing was opened in each of the carbon-steel base-material steel plates, on which the austenitic stainless steel was stacked as a cladding-material steel plate, and four sides of a stacking plane were hermetically sealed by MIG welding.

While resulting clad starting materials for rolling were heated at respective predetermined temperatures, the clad starting materials for rolling were subjected to vacuum drawing performed through the hole for the vacuum drawing until degrees of vacuum in their stacking planes become respective degrees of vacuum shown in Table 3, and then the hole was hermetically closed. The resulting clad starting materials for rolling were subjected to heating, rolling, cooling, that were controlled at heating temperatures, rolling reduction ratios at 1000°C or more and rolling reduction rates at 1000°C or less, and average cooling rates for 700°C to 400°C and 400 to 200°C shown in Table 3, respectively, and the like, to be finally produced into austenitic-stainless clad steel plates having thicknesses of 23 to 34 mm.

A shearing strength test was conducted in conformity with JIS G 0601:2012, in which measurement was performed on test specimens that were taken from 300-mm portions from both ends and a center portion of the clad steel plate, the number of which was 10 in total, and each of which included, in a direction perpendicular to the rolling, the cladding material having a plate thickness of 3 mm and the base material having a plate thickness of 13 mm. In fabricating each test specimen, the cladding material was cut off, and a length of the cutting was determined to be a length obtained by adding 0 to 0.1 mm to a plate thickness of the cladding material and adjusted such that the base material was not cut by more than 0.1 mm. While the test specimen was clamped in a specified jig, a load was applied to the test specimen to separate the test specimen, and based on the load, a shearing strength was determined.

In a tensile test, a No. 14A tensile test specimen conforming to JIS Z 2241:2011 was taken from a base material portion in a plate width direction, and the test was conducted at a tension speed of 10 N/mm$^2$sec until a yield point and 0.008 /sec after the yield point to determine a shearing strength.

In a hydrogen analysis, samples were taken from a base material portion and a cladding material portion, and hydrogen contents of the samples were measured by the inert gas fusion method and the thermal conductivity method defined in JIS Z 2614:1990.

For toughness, a V notch specimen conforming to JIS Z 2242:2005 was taken from a base material portion in a plate width direction, and a Charpy impact value at -20°C was determined by the Charpy impact test.

Conditions and Measurement results are shown below in Table 3.

[Table 3]

**TABLE 3**

| Test No. | Steel type of base material | Steel type of cladding material | Heating temperature in vacuum drawing (°C) | Degree of vacuum (Torr) | Heating temperature of clad starting material for rolling (°C) | Rolling reduction ratio at 1000°C or more | Rolling reduction rate at less than 1000°C (%) | Plate thickness (mm) | Cooling rate 700-400°C (°C/s) | Cooling rate 400-200°C (°C/s) | Hydrogen content Base material (ppm) | Hydrogen content Cladding material (ppm) | Tensile strength of base material (MPa) | Shearing strength Average (MPa) | Shearing strength Standard deviation (MPa) | Others | Classification |
|---|---|---|---|---|---|---|---|---|---|---|---|---|---|---|---|---|---|
| 1 | C | A | 350 | 0.008 | 1200 | 3.2 | 42 | 25 | 0.8 | 0.4 | 0.7 | 2.2 | 503 | 421 | 18 | | Inventive example |
| 2 | D | A | 250 | 0.009 | 1150 | 3.2 | 42 | 25 | 0.8 | 0.4 | 0.8 | 2.5 | 572 | 441 | 18 | | Inventive example |
| 3 | E | A | 300 | 0.009 | 1200 | 3.2 | 33 | 29 | 0.7 | 0.3 | 0.7 | 2.3 | 551 | 431 | 17 | | Inventive example |
| 4 | E | B | 300 | 0.008 | 1100 | 3.5 | 33 | 27 | 0.7 | 0.3 | 0.7 | 2.4 | 559 | 430 | 16 | | Inventive example |
| 5 | F | A | 250 | 0.007 | 1150 | 3.1 | 32 | 31 | 0.8 | 0.4 | 0.8 | 2.6 | 565 | 435 | 18 | | Inventive example |
| 6 | F | B | 350 | 0.009 | 1200 | 3.5 | 42 | 23 | 0.8 | 0.4 | 0.6 | 2.1 | 563 | 433 | 15 | | Inventive example |
| 7 | C | A | 130 | 0.008 | 1200 | 3.2 | 33 | 29 | 0.7 | 0.3 | 1.4** | 3.7** | 508 | 403 | 42* | | Comparative example |
| 8 | C | A | 480 | 0.008 | 1200 | 3.5 | 33 | 27 | 0.7 | 0.3 | 0.4 | 1.8 | 510 | 373* | 31* | | Comparative example |
| 9 | C | A | 300 | 0.152 | 1150 | 3.5 | 42 | 23 | 0.8 | 0.4 | 1.9** | 4.8** | 505 | 333* | 50* | | Comparative example |
| 10 | C | A | 350 | 0.007 | 1020 | 1.3 | 70 | 32 | 0.6 | 0.3 | 0.7 | 2.1 | 531 | 235* | 35* | | Comparative example |
| 11 | C | A | 250 | 0.008 | 1060 | 2.4 | 42 | 34 | 0.6 | 0.3 | 0.8 | 2.3 | 525 | 311* | 35* | | Comparative example |
| 12 | N** | A | 300 | 0.008 | 1100 | 3.5 | 20 | 32 | <u>10</u> | 0.3 | 0.6 | 2.2 | 475* | 416 | 15 | | Comparative example |
| 13 | N** | A | 350 | 0.009 | 1150 | 3.2 | 33 | 29 | 0.8 | 0.6 | 0.6 | 2.7 | 513 | 403 | 35* | | Comparative example |
| 14 | N | A | 300 | 0.008 | 1200 | 3.2 | 42 | 25 | 0.8 | 0.4 | 0.6 | 2.4 | 498 | 408 | 28* | | Comparative example |
| 15 | N | A | 250 | 0.007 | 1200 | 3.2 | 42 | 25 | 0.8 | 0.4 | 0.7 | 2.6 | 496 | 419 | 16 | | Inventive example |
| 16 | G** | A | 350 | 0.008 | 1200 | 3.2 | 33 | 29 | 0.7 | 0.3 | 0.6 | 2.1 | 465* | 415 | 13 | | Comparative example |
| 17 | G** | A | 300 | 0.007 | 1200 | 3.2 | 33 | 29 | <u>10</u> | 0.3 | 0.7 | 2.8 | 495 | 418 | 16 | | Inventive example |
| 18 | H** | A | 250 | 0.008 | 1150 | 3.5 | 42 | 25 | 0.8 | 0.4 | 0.8 | 2.6 | 631 | 444 | 18 | | Inventive example |
| 19 | I** | A | 250 | 0.008 | 1100 | 3.5 | 42 | 23 | 0.8 | 0.4 | 0.8 | 2.7 | 471* | 420 | 18 | Poor toughness in weld zone | Comparative example |
| 20 | J** | B | 300 | 0.009 | 1200 | 3.5 | 33 | 27 | 0.7 | 0.3 | 0.7 | 2.3 | 475* | 419 | 16 | Poor toughness | Comparative example |
| 21 | K** | B | 350 | 0.042 | 1150 | 3.5 | 33 | 27 | 0.7 | 0.3 | 0.7 | 2.1 | 468* | 425 | 16 | Poor toughness | Comparative example |
| 22 | L** | B | 350 | 0.008 | 1200 | 3.2 | 42 | 25 | 0.8 | 0.4 | 0.6 | 1.9 | 525 | 421 | 15 | Poor toughness | Inventive example |
| 23 | M** | B | 300 | 0.007 | 1150 | 3.2 | 42 | 25 | 0.8 | 0.4 | 0.8 | 2.4 | 518 | 419 | 17 | Poor toughness | Inventive example |

The mark "*" indicates that the value fell out of the range defined in the present invention.
The mark "**" indicates that the value fell out of the preferable range defined in the present invention.
The underlined indicates that the value fell out of the preferable producing condition defined in the present invention.

Nos. 1 to 6 are inventive examples of the present invention, hydrogen amounts of their cladding materials and base materials were sufficiently small, their base materials satisfied the defined tensile strength, and satisfactory characteristics were obtained for both averages and standard deviations of shearing strengths of the interfaces with their cladding materials.

No. 7 resulted in an average of shearing strengths exceeded 400 MPa but resulted in a high standard deviation of shearing strengths, indicating that the shearing strengths varied greatly depending on positions. This is considered to be because the heating temperature in the vacuum drawing was excessively low, resulting in a large amount of remaining hydrogen. In No. 8, its average value and its standard deviation value of shearing strengths decreased. This

EP 3 862 456 A1

is considered to be because the heating temperature in the vacuum drawing was excessively high, which caused the carbon steel being its base material to bend, partially forming fine gaps. In No. 9, its average value and its standard deviation value of shearing strengths significantly decreased. This is considered to be because the vacuum drawing was ended while the degree of vacuum was high, which caused hydrogen to remain in large quantity in its base material, resulting in occurrence of an uncompressed portion during the rolling.

In No. 10, its average value and its standard deviation value of shearing strengths greatly decreased. This is considered to be because almost no rolling reduction ratio at 1000°C or more was ensured because the heating temperature in the hot rolling was excessively low. In No. 11, similarly, its rolling reduction ratio at 1000°C or more was low, and its average value and its standard deviation value of shearing strengths decreased. In No. 12, its strength was low because the rolling reduction rate at less than 1000°C was low.

In cases of No. 13 and No. 14, where their base materials were of a steel type N, which is a low alloy steel having a high content of Ni, their standard deviations of shearing strengths were high. This is considered to be because the cooling rates after the rolling were high in No. 13 and No. 14, which caused the shearing strengths to vary greatly. In No. 15, the cooling rate after the rolling was within the range of the preferable producing conditions defined in the present invention, and thus stable shearing strengths were able to be provided.

In a case such as No. 16 where its base material was of a steel type G having a low content of C, performing the slow cooling described in Section 6-4 resulted in a poor strength. When the slow cooling is performed, a higher content of C is desirable. However, in the case of this base material, a predetermined strength can be provided by performing rapid cooling as in a steel type No. 17.

In No. 18, the steel type of its base material was H, which has an excessively high content of C, and thus its strength was high, decreasing a toughness of its weld zone. In Nos. 19 to 21, the steel types of their base materials were I, J, and K, in which contents of Mn, Nb, and Ti were excessively low, respectively, which caused grains in their base materials to coarsen, resulting in low strengths and low toughnesses. In No. 22 and No. 23, the steel types of their base materials were L and M, which satisfied the ranges defined in the present invention, and thus No. 22 and No. 23 were inventive examples of the present invention, but contents of Al and N were excessively high, which caused nitrides to precipitate, decreasing their toughnesses.

INDUSTRIAL APPLICABILITY

According to the present invention, regarding a clad steel plate of which a cladding material is austenitic stainless steel and a base material is carbon steel or low alloy steel, an austenitic clad steel plate having sufficiently high tensile strength and a stably high interfacial adhesiveness can be provided, which makes extremely great contribution industrially and environmentally.

**Claims**

1. An austenitic-stainless clad steel plate that comprises a base material and a cladding material bonded to the base material, wherein
the base material is made of carbon steel or low alloy steel,
a carbon equivalent Ceq of the base material expressed by the following Formula (i) is 0.38 or less, and a tensile strength of the base material is 490 MPa or more to 620 MPa or less,
the cladding material is made of austenitic stainless steel, and
an average value of shearing strengths of a bonding interface between the base material and the cladding material is 400 MPa or more, and a standard deviation of the shearing strengths is 20 MPa or less:

$$Ceq = C + Mn/6 + (Cr+Mo+V)/5 + (Ni+Cu)/15 \qquad (i)$$

where each symbol of an element in Formula (i) indicates a content of the element (mass%) contained in the steel, and a content being zero means that the element is not contained.

2. The austenitic-stainless clad steel plate according to claim 1, wherein a hydrogen content of the base material is 1.0 ppm or less, and a hydrogen content of the cladding material is 3.0 ppm or less.

3. The austenitic-stainless clad steel plate according to claim 1 or 2, wherein a chemical composition of the base material contains, in mass percent:

C: 0.08 to 0.10%;
Si: 0.10 to 0.50%;
Mn: 1.30 to 1.60%;
P: 0.035% or less;
S: 0.035% or less;
Nb: 0.02 to 0.05%;
Ti: 0.005 to 0.020%;
Al: 0.01 to 0.05%;
N: 0.006% or less; and
Ni: 0 to 0.20%.

4. A method for producing the austenitic-stainless clad steel plate according to any one of claims 1 to 3, the method comprising:

(a) a step of stacking a base-material steel plate and a cladding material steel plate, the base-material steel plate being carbon steel or low alloy steel, including a surface, and being provided in advance with a hole communicating with the surface, the cladding material steel plate including a surface and being austenitic stainless steel, causing the surfaces to abut each other to form a stacking plane, and sealing a circumference of the stacking plane by welding, to produce a clad starting material for rolling;
(b) a step of performing vacuum drawing from the hole communicating with the stacking plane while heating the clad starting material for rolling to a temperature of 200 to 450°C so that a degree of vacuum in the stacking plane becomes 0.1 Torr or less; and
(c) a step of heating, after the step (b), the clad starting material for rolling within a temperature range from 1050 to 1250°C, and performing hot rolling on the clad starting material for rolling.

5. The method for producing an austenitic-stainless clad steel plate according to claim 4, wherein in the step (c), in performing the hot rolling, a rolling reduction ratio in a temperature region of 1000°C or more is set at 3 or more, and a rolling reduction rate in a temperature region of less than 1000°C is set at 30% or more.

6. The method for producing an austenitic-stainless clad steel plate according to claim 4 or 5, wherein after the hot rolling in the step (c), cooling is performed at a cooling rate of less than 1.0°C/s in a temperature region of 700 to 400°C and at a cooling rate of 0.4°C/s or less in a temperature region of 400 to 200°C.

7. A base-material steel plate used in the method for producing an austenitic-stainless clad steel plate according to claim 6, the base-material steel plate comprising a chemical composition containing, in mass percent:

C: 0.08 to 0.10%;
Si: 0.10 to 0.50%;
Mn: 1.30 to 1.60%;
P: 0.035% or less;
S: 0.035% or less;
Nb: 0.02 to 0.05%;
Ti: 0.005 to 0.020%;
Al: 0.01 to 0.05%;
N: 0.006% or less; and
Ni: 0 to 0.20%.

**EP 3 862 456 A1**

<table>
<tr><td colspan="2" align="center">**INTERNATIONAL SEARCH REPORT**</td><td colspan="2">International application No.<br>PCT/JP2019/038670</td></tr>
</table>

A. CLASSIFICATION OF SUBJECT MATTER
Int.Cl.   C22C38/00(2006.01)i, B23K20/00(2006.01)i, C21D8/02(2006.01)i,
            C22C38/14(2006.01)i, C22C38/44(2006.01)n, C22C38/58(2006.01)n

According to International Patent Classification (IPC) or to both national classification and IPC

B. FIELDS SEARCHED

Minimum documentation searched (classification system followed by classification symbols)
Int.Cl.   C22C38/00-C22C38/60, B23K20/00-B23K20/26, C21D8/02, C21D9/46,
            B21B1/22, B21B1/38

Documentation searched other than minimum documentation to the extent that such documents are included in the fields searched
| | |
|---|---|
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | JP 6-235050 A (NIPPON STEEL CORP.) 23 August 1994,<br>claims, paragraphs [0001], [0029], tables 1-2<br>(Family: none) | 1-2<br>3-7 |
| Y<br>A | JP 6-7803 A (NIPPON STEEL CORP.) 18 January 1994,<br>claims, paragraphs [0001]-[0008], [0011], fig. 2<br>(Family: none) | 1-3<br>4-7 |

☒ Further documents are listed in the continuation of Box C. ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 13 December 2019 (13.12.2019) | 24 December 2019 (24.12.2019) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

**17**

**INTERNATIONAL SEARCH REPORT**

International application No.

PCT/JP2019/038670

C (Continuation). DOCUMENTS CONSIDERED TO BE RELEVANT

| Category* | Citation of document, with indication, where appropriate, of the relevant passages | Relevant to claim No. |
|---|---|---|
| Y<br>A | CN 108116006 A (BAOSHAN IRON & STEEL) 05 June 2018, claims, paragraphs [0002]-[0003], [0048]-[0051], [0054]-[0061], [0064], tables 1-3 & EP 3549760 A1, claims, paragraphs [0002]-[0003], [0038]-[0043], table 1-3 & WO 2018/099326 A1 | 1-3<br>4-7 |
| A | JP 2-284777 A (NKK CORP.) 22 November 1990 (Family: none) | 1-7 |
| A | JP 4-75791 A (NIPPON STEEL CORP.) 10 March 1992 (Family: none) | 1-7 |
| A | JP 2000-1734 A (THE JAPAN STEEL WORKS, LTD.) 07 January 2000 (Family: none) | 1-7 |
| A | CN 108085585 A (BAOSHAN IRON & STEEL) 29 May 2018 & WO 2018/095258 A1 & EP 3546611 A1 & AU 2017364679 A1 & KR 10-2019-0072574 A | 1-7 |

Form PCT/ISA/210 (continuation of second sheet) (January 2015)

**EP 3 862 456 A1**

## REFERENCES CITED IN THE DESCRIPTION

**Patent documents cited in the description**

- JP 5154672 A
- JP 5245658 A
- JP 2015105399 A
- WO 201559909 A